# EUROPÄISCHE PATENTANMELDUNG

(11) **EP 2 299 650 A1**
(43) Veröffentlichungstag der Anmeldung: **23.03.2011**
(21) Anmeldenummer: 09015135.8
(22) Anmeldetag: 07.12.2009
(51) Int. Cl.: H04L 29/06, G06F 21/00

(54) **Verfahren zur Anomalie-Erkennung in einem Kontrollnetzwerk**

(30) Priorität: 21.09.2009 DE 102009042407
(71) Anmelder: SIEMENS AKTIENGESELLSCHAFT, 80333 München (DE)
(72) Erfinder: Busser, Jens-Uwe, Dr., 81739 München (DE); Kästner, Jan, 76316 Malsch (DE); Munzert, Michael, 82166 Gräfelfing (DE); Störmann, Christof, 81739 München (DE)

(57) **Zusammenfassung**

Zur Anomalie-Erkennung in einem Kontrollnetzwerk etwa für Überwachung und Steuerung, Industrie- oder Gebäude-Automatisierung wird eine Technologie eines Einbruchs-Erkennungs-Systems (englische Bezeichnung "intrusion detection system", bzw. IDS) adaptiert, um eine zeitliche Reihenfolge und zeitliche Abstände von ordnungsgemäßen Nachrichten im Netzwerkverkehr zu analysieren und für ein Training eines Anomalie-Erkennungssystems zu verwenden. Durch diese Ermittlung einer zeitlichen Abfolge und eines Rhythmus von ordnungsgemäßen Nachrichten wird es möglich, Fehlfunktionen oder Manipulationen von Geräten sowie Angriffe zu erkennen, welche unter Verwendung von regulären, aber von Angreifern übernommenen oder defekten Beobachtungs- oder Kontrollstationen durchgeführt werden, und die weder mit inhaltsbasierten Methoden (mittels Signaturen oder Byte-Sequenz-Analyse) noch durch eine deutliche Zunahme des Datenverkehrs zu erkennen sind. So wird eine weitere Sicherheitsbarriere geschaffen, welche eine technische Anlage, deren Kontrollnetzwerk bereits korrumpiert wurde, immer noch überwachen und (ggf. durch Alarmierung von Sicherheitspersonal) vor möglichen Sabotageakten schützen kann.

## Beschreibung

### Beschreibung

### Verfahren zur Anomalie-Erkennung in einem Kontrollnetzwerk

Die Vernetzung vieler Computer und lokaler Netzwerke zu einem weltweiten Netzwerk (dem Internet) während der letzten Jahrzehnte hat die Effektivität und Anwenderfreundlichkeit zahlreicher Prozesse im geschäftlichen, staatlichen und privaten Bereich stark erhöht. Unglücklicherweise stieg mit zunehmender Komplexität der Anwendungen auch die Anzahl inhärenter Fehler und Schwachstellen stark an, die übelgesinnten Dritten einen Missbrauch dieser Systeme zu eigenen Zwecken ermöglichen. Obwohl Hersteller zunehmend versuchen, solche Schwachstellen bereits bei der Software-Entwicklung durch geeignete Programmiertechniken und Qualitätssicherungsprozesse zu reduzieren sowie diese nach Bekanntwerden baldmöglichst zu beseitigen, wächst die Anzahl der jährlich bekanntwerdenden Schwachstellen in IT-Systemen weiter an.

IT-basierte Überwachungs- und Steuersysteme (übliche englische Bezeichnungen solcher Systeme sind "Supervisory Control and Data Acquisition" bzw. SCADA, "Distributed Control System" bzw. DCS, "Energy Management System" bzw. EMS, etc.) sind mittlerweile auch in vielen technischen Anlagen wie Industrieanlagen, Fabriken und Kraftwerken, bei der Strom-, Wasser- und Gasverteilung sowie bei Öl- und Gaspipelines im Einsatz. Diese unterschieden sich bisher von herkömmlichen IT-Systemen dadurch, dass sie vollkommen abgeschottet in physikalisch geschützten Bereichen betrieben wurden, und oft besondere, im IT-Umfeld nicht gebräuchliche Kommunikationsprotokolle verwendet haben. Höchste Priorität hat hier hohe Zuverlässigkeit. Schnelle Antwortzeiten bis in den Millisekundenbereich sind Voraussetzung für die Kommunikation von Feldgeräten untereinander (z.B. zur Realisierung von Schutzfunktionen bei Energietransport und -verteilung). Informationssicherheit war im Gegensatz zum IT-Umfeld nachrangig, da solche Automatisierungsnetzwerke bereits intrinsisch sicher oder nicht mit unsicheren Netzwerken verbunden waren.

Diese Systeme werden nun zunehmend auch mit anderen Netzwerken zu einem übergreifenden Kontrollnetzwerk verbunden, um weitere Effizienzsteigerungen zu erzielen. So wird etwa ein System zum direkten Steuern der Anlage ("Manufacturing Control System" bzw. MCS) mit einem System zur Qualitätsüberwachung und Produktionsplanung ("Manufacturing Execution System" bzw. MES) verbunden, und dieses - oder beide - wiederum mit einem System zur Planung von Unternehmensressourcen ("Enterprise Resource Planning" bzw. ERP), welches eine der Büro-Software-Anwendungen des Unternehmens ist. Technische Anlagen an unterschiedlichen Standorten kommunizieren über gemietete Leitungen oder gar vollkommen öffentliche Netzwerke miteinander. Zugänge für die Fernwartung von Anlagen werden eingerichtet. Sogar Informationen aus öffentlichen Netzwerken (Zeit, Wettervorhersage, Rohstoffpreise des Lieferanten, etc.) können in den Betrieb einer technischen Anlage einfließen.

Durch die zunehmende Vernetzung entstehen nun Kontrollnetzwerke, welche leichter angreifbar sind, da der intrinsische Schutz durch die Abschottung der einzelnen Systeme immer mehr entfällt. Dadurch entsteht - wie im klassischen IT-Umfeld - zunehmend die Notwendigkeit, Anlagenteile auf den sicherheitstechnisch aktuellen Stand zu bringen und dort zu halten. Dies ist jedoch oft nicht möglich, da entsprechende Korrekturen (engl. "Patch") - sofern überhaupt verfügbar - nicht im laufenden Betrieb eingespielt werden können, wenn sie einen Neustart der jeweiligen Systeme erfordern. Auch Wartungspausen reichen hierfür oft nicht aus, da in diesen ggf. andere Arbeiten durchgeführt werden müssen.

Dies kann dazu führen, dass auch bekannte Sicherheitsschwachstellen in Kontrollnetzwerken über viele Jahre nicht behoben werden. Auch ein Einsatz von Virenscannern ist problematisch, da er sowohl durch Performanzeinbußen der scannenden Geräte als auch durch Blockieren von (ggf. fälschlicherweise) als schädlich erkannten Dateien und Programmen die Anlagensteuerung ernsthaft beeinträchtigen kann.

Eine möglichst genaue Überwachung eines Kontrollnetzwerks einer technischen Anlage, insbesondere bezüglich netzwerkbasierter Angriffe, ist daher essenziell, um frühzeitig geeignete Gegenmaßnahmen ergreifen zu können und einen Ausfall der technischen Anlage mit unter Umständen schwerwiegenden Konsequenzen für Mensch, Material und Umwelt zu vermeiden.

Ein Kontrollnetzwerk dient - je nachdem, um welche technische Anlage es sich handelt - der Steuerung und Überwachung in der Industrie- oder Gebäudeautomatisierung. In der Industrieautomatisierung steuern Kontrollnetzwerke unter anderem Fabriken oder Kraftwerke sowie Strom-, Wasser- oder Gasverteilung, sie kommen aber auch bei Öl- und Gaspipelines zum Einsatz.

Bisher findet eine sicherheitstechnische Überwachung von Kontrollnetzwerken eher selten statt; man verlässt sich weitestgehend noch auf die (vermeintliche) Abschottung des Kontrollnetzwerkes zur Produktionssteuerung sowie auf mangelnde Kenntnis über entsprechende Protokolle und Geräte der zumeist aus dem traditionellen IT-Umfeld stammenden potenziellen Angreifer. Mit zunehmender Verbindung der Netzwerke, zunehmender Erfahrung der Angreifer sowie deren steigender Motivation und Kommerzialisierung wird diese Strategie aber immer weniger erfolgreich sein.

Einbrüche in ein Kontrollnetzwerk können mit einem aus dem Stand der Technik bekannten Einbruchs-Erkennungssystem (engl. Bezeichnung "Intrusion Detection System" bzw. IDS) entdeckt werden, solange der Angriff bzw. die Störung noch andauert.

Die am weitesten verbreiteten Einbruchs-Erkennungssysteme (z.B. SNORT) arbeiten überwiegend signatur-basiert. Diese Signaturen müssen zur Erkennung einzelner Angriffe aufwändig erzeugt werden. Bei der Konfiguration eines installierten Einbruchs-Erkennungssystems müssen die Muster der relevanten Angriffe dann ausgewählt und beispielsweise in Form einer Konfigurationsdatei dem Einbruchs-Erkennungssystem bekannt gemacht werden. Sobald neue Schwachstellen bekannt werden oder Angriffe auf bereits bekannte Schwachstellen modifiziert werden, sind neue Signaturen zu erzeugen und die Einbruchs-Erkennungssystem-Konfigurationsdatei entsprechend zu erweitern.

Andere bekannte Ansätze der Verkehrsanalyse erkennen Scanning- und Flooding-Angriffe anhand deren stark veränderten Verkehrsaufkommens bereits in der TCP/IP-Schicht.

Alle oben genannten und weiteren Maßnahmen (wie Firewalls, Application Gateways, DMZ, Sicherheitszellen) sind geeignet, das Kontrollnetzwerk zu schützen. Allerdings gibt es nur wenig Schutz der eigentlichen technischen Anlage, falls das Kontrollnetzwerk bereits - wie auch immer - korrumpiert und übernommen wurde. Dann können mit regulären Kommandos detaillierte Information über Anlagenabläufe gesammelt werden. Weiterhin lässt sich die technische Anlage in diesem Fall durch ein Verstellen von Aktuatoren außer Kontrolle bringen.

Es stellt sich somit die Aufgabe, ein Verfahren zur Anomalie-Erkennung in einem Kontrollnetzwerk anzugeben, mit welchem Anomalien erkannt werden können, welche mit den aus dem Stand der Technik bekannten Maßnahmen nicht ermittelbar sind.

Diese Aufgabe wird erfindungsgemäß dadurch gelöst, dass zur Anomalie-Erkennung in einem Kontrollnetzwerk ein Mikroprozessor programmiert ist, um fünf Schritte durchzuführen. Im ersten Schritt werden Kommunikationsdaten in dem Kontrollnetzwerk ermittelt. Im zweiten Schritt werden eine zeitliche Reihenfolge und/oder zeitliche Abstände von ordnungsgemäßen Nachrichten in den Kommunikationsdaten ermittelt und in Trainingsdaten abgelegt. Im dritten Schritt wird ein Anomalie-Erkennungssystem mit den Trainingsdaten trainiert. Im vierten Schritt werden aktuelle Kommunikationsdaten in dem Kontrollnetzwerk ermittelt. Abschließend werden im fünften Schritt mit dem Anomalie-Erkennungssystem die zeitliche Reihenfolge und/oder die zeitlichen Abstände der ordnungsgemäßen Nachrichten in den aktuellen Kommunikationsdaten auf eine Abweichung von den Trainingsdaten geprüft.

Ferner umfasst die Erfindung ein Computerprogramm, welches in einem Computer abgearbeitet wird und dabei das Verfahren mit den zuvor beschriebenen Schritten ausführt. Das Computerprogramm kann hierbei auch auf einem computerlesbaren Datenträger gespeichert sein.

Weitere vorteilhafte Ausführungsformen der Erfindung sind durch die Merkmale der Unteransprüche gekennzeichnet.

Gemäß dem Verfahren werden eine zeitliche Reihenfolge und/oder zeitliche Abstände von ordnungsgemäßen Nachrichten in den Kommunikationsdaten ermittelt, in Trainingsdaten abgelegt und für das Training des Anomalie-Erkennungssystems (und damit für die spätere Erkennung von Abweichungen) herangezogen.

Durch diese Ermittlung einer zeitlichen Abfolge und eines "Rhythmus" von ordnungsgemäßen Nachrichten wird es möglich, Angriffe zu erkennen, die unter Verwendung von regulären, aber von Angreifern übernommenen Beobachtungs- oder Kontrollstationen durchgeführt werden, und die weder mit inhaltsbasierten Methoden (mittels Signaturen oder Byte-Sequenz-Analyse) noch durch eine deutliche Zunahme des Datenverkehrs zu erkennen sind.

Ferner lassen sich auch Angriffe erkennen, die z.B. durch Übernahme eines regulären und autorisierten Gerätes möglich sind, bei dem ein Angreifer in den Besitz von vertraulichen kryptografischen Schlüsseln gerät. Es können somit Angriffe entdeckt werden, die sich weder durch den Inhalt ihrer Nachrichten (Verwendung anderer Protokolle, ungewöhnliche Anfragen, falsche HMACs oder Signaturen, ...) noch durch deren Weg (falscher Absender oder Empfänger) von normalem Verhalten unterscheiden und somit von Byte-Muster-detektierenden Verfahren nicht erkannt werden können.

Es können sowohl Technologien netzwerkbasierter Einbruchs-Erkennungssysteme (NIDS) als auch gerätebasierter Einbruchs-Erkennungssysteme (HIDS) verwendet werden. Vorteilhaft ist eine Installation des Anomalie-Erkennungssystems auf einem oder mehreren Servern.

Ein Vorteil des Verfahrens liegt in der Analyse eines zeitlichen Verhaltens (Abfolge, Rhythmus) von ordnungsgemäßen Nachrichten zwischen regulären autorisierten Geräten als weiteres, neues Kriterium zur Sicherheitsüberwachung des Kontrollnetzwerks.

Das Verfahren schafft eine weitere Sicherheitsbarriere, die eine technische Anlage, deren Kontrollnetzwerk bereits korrumpiert wurde, immer noch überwachen und (durch Alarmierung von Sicherheitspersonal) vor möglichen Sabotageakten schützen kann.

Im Folgenden werden Ausführungsbeispiele der Erfindung anhand von Figuren näher erläutert. Es zeigen:
- Figur 1: ein Kontrollnetzwerk mit Geräten, welche ggf. von ei- nem Angreifer übernommen werden können,
- Figur 2: ein Ablaufdiagramm des Verfahrens,
- Figur 3: eine schematische Darstellung des Verfahrens und der beteiligten Systeme.

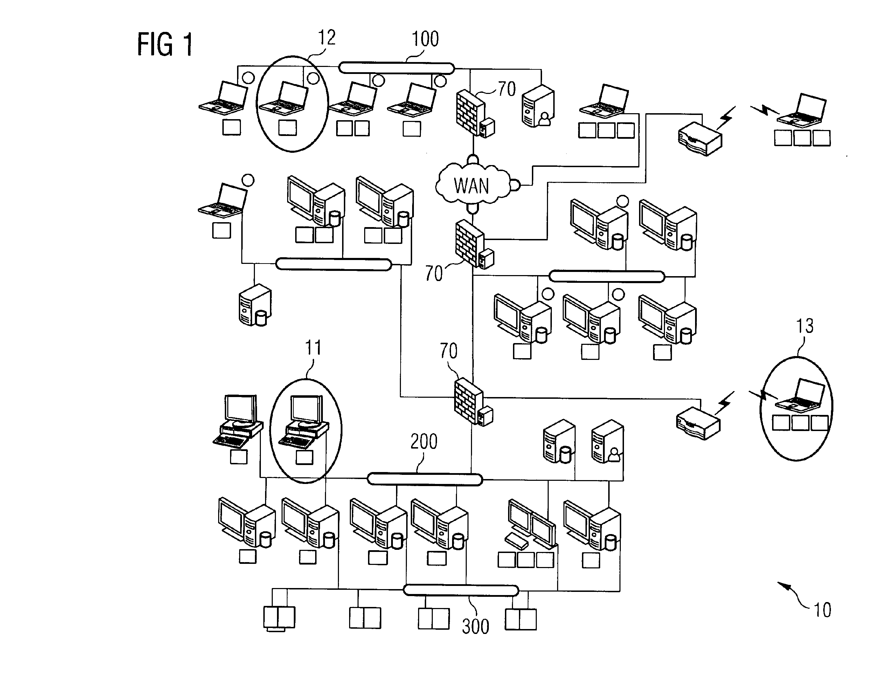

Figur 1 zeigt ein Kontrollnetzwerk 10. Dieses besteht aus einer Anzahl miteinander verknüpfter Netzwerke, darunter ein Unternehmenskontroll-Netzwerk 100 (beispielsweise im Rahmen eines ERP- oder MES-Systems), ein Prozesskontroll-Netzwerk 200 und ein Kontrollsystem-Netzwerk 300. Weiterhin enthält das Kontrollnetzwerk 10 mehrere autorisierte Beobachtungsoder Kontrollstationen, darunter ein Client 11, ein Web-Client 12 sowie eine Support-Station 13 für einen Fernwartungszugang. Als Sicherheitsvorkehrung sind mehrere Firewalls 70 in dem Kontrollnetzwerk 10 vorgesehen. Figur 1 zeigt nun den Fall, dass ein Angreifer bereits erfolgreich eine autorisierte Beobachtungs- oder Kontrollstation übernommen hat, beispielweise
- den Client 11 oder einen Server im Prozesskontroll-Netzwerk 200,
- den Web-Client 12 im Unternehmenskontroll-Netzwerk 100,
   oder
- die Support-Station 13.

Der Angreifer kann nun diejenigen Teile der technischen Anlage ausspähen oder sogar manipulieren, für die die von ihm übernommene autorisierte Beobachtungs- oder Kontrollstation zuständig ist. Der Angriff richtet sich dabei nicht gegen das Kontrollnetzwerk 10, sondern - unter Verwendung bzw. Missbrauch des Kontrollnetzwerks 10 - gegen die technische Anlage selbst. Der Angriff beschränkt sich dabei auf reguläre Befehle und Kommunikationsnachrichten. Kryptographische Prüfsummen und Signaturen können von der übernommenen autorisierten Beobachtungs- oder Kontrollstation korrekt berechnet werden. Die Kommunikationswege werden - wie in der Projektierung festgelegt - ordnungsgemäß eingehalten. Sowohl signatur-basierte Einbruchs-Erkennungssysteme als auch selbstlernende Einbruchs-Erkennungssysteme basierend auf Byte-Sequenzen können einen solchen Angriff daher praktisch nicht feststellen.

Die Beobachtungs- und Kontrollstationen müssen deshalb besonders geschützt werden, vor allem wenn sie sich außerhalb des physikalisch und informationstechnisch relativ gut geschützten Kontrollnetzwerkes 10 befinden.

Im Folgenden wird ein erstes Ausführungsbeispiel beschrieben.

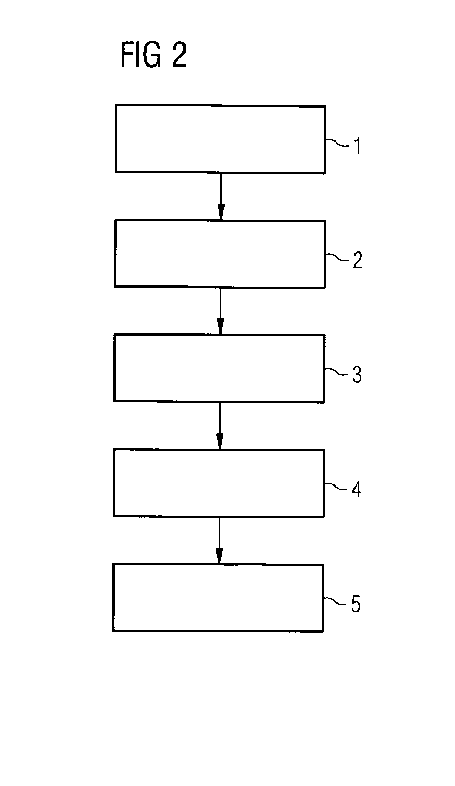

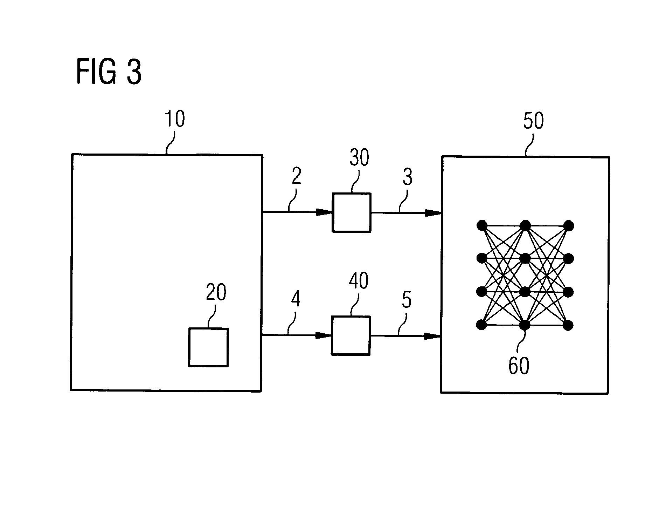

Figur 2 zeigt ein Ablaufdiagramm des Verfahrens zur Anomalie-Erkennung im Kontrollnetzwerk 10. Abgebildet ist ein erster Schritt 1, ein zweiter Schritt 2, ein dritter Schritt 3, ein vierter Schritt 4 sowie ein fünfter Schritt 5 des Verfahrens. Bis auf den ersten Schritt 1 sind diese Schritte auch in Figur 3 gezeigt, welche das Verfahren sowie ein Anomalie-Erkennungssystem 50 und das Kontrollnetzwerk 10 schematisch darstellt.

Im in Figur 2 gezeigten ersten Schritt 1 werden Kommunikationsdaten in dem Kontrollnetzwerk 10, beispielsweise Netzwerkverkehrsdaten, ermittelt.

In dem in Figur 2 und Figur 3 gezeigten zweiten Schritt 2 werden eine zeitliche Reihenfolge und/oder zeitliche Abstände von ordnungsgemäßen Nachrichten in den Kommunikationsdaten ermittelt und in Trainingsdaten 30 abgelegt.

Im dritten Schritt 3 wird ein Anomalie-Erkennungssystem 50 mit den Trainingsdaten 30 trainiert. Das Anomalie-Erkennungssystem 50 wird somit in einer anfänglichen Trainingsphase auf Basis eines sicheren, noch nicht durch feindliche Angriffe kontaminierten Kontrollnetzwerks 10 angelernt. Hierzu enthält das Anomalie-Erkennungssystem 50 beispielsweise ein neuronales Netz 60, welches trainiert wird. Das Anomalie-Erkennungssystem 50 kann jedoch auch mit einer anderen Technologie, etwa einer Support-Vektor-Maschine, implementiert werden.

Im vierten Schritt 4 werden aktuelle Kommunikationsdaten 40 in dem Kontrollnetzwerk ermittelt.

Im fünften Schritt 5 werden mit dem Anomalie-Erkennunggsystem 50 die zeitliche Reihenfolge und/oder die zeitlichen Abstände der ordnungsgemäßen Nachrichten in den aktuellen Kommunikationsdaten 40 auf eine Abweichung von den Trainingsdaten 30 geprüft. Eine derartige Abweichung wird erkannt, wenn eine in Figur 3 gezeigte Einheit 20, insbesondere eine der in Figur 1 gezeigten Beobachtungs- oder Kontrollstationen, im Kontrollnetzwerk 10 von einem Angreifer übernommen oder anderweitig manipuliert wurde oder einen Defekt aufweist.

Das Kontrollnetzwerk 10 ist nicht auf die Industrieautomatisierung (inklusive Energie- und Wasserverteilung, Pipelines, etc.) beschränkt, sondern kann auch andere Bereiche und Branchen betreffen, z.B. Netzwerke zur Gebäudeautomatisierung, Telekommunikationsnetze, usw.

Im Folgenden wird ein zweites Ausführungsbeispiel beschrieben, welches eine Konkretisierung der bisherigen Ausführungen darstellt. Gemäß dem zweiten Ausführungsbeispiel kann sich ein Bediener am Client 11 sowohl einen Überblick über eine gesamte technische Anlage als auch detaillierte Informationen über deren Teilbereiche anzeigen lassen. Zum Überwachen wird er üblicherweise ein neu aufgerufenes Bild mindestens einige Sekunden lang betrachten, bevor er ein weiteres Bild aufruft. Fragt jedoch der Client 11 innerhalb kurzer Zeit (z.B. weniger als eine Sekunde) mehrere Bilder ab, so lässt sich dies nicht mehr auf eine normale und sorgfältige Tätigkeit des Bedieners zurückführen, sondern weist vielmehr darauf hin, dass z.B. ein bösartiges Programm die technische Anlage scannt und in möglichst kurzer Zeit viele Informationen sammeln will.

Zur Implementierung des zweiten Ausführungsbeispiels wird ein Mikroprozessor programmiert, um Kommunikationsdaten in dem Kontrollnetzwerk 10 zu ermitteln und zeitliche Abstände von ordnungsgemäßen Nachrichten (diese sind enthalten in den Kommunikationsdaten) in den Trainingsdaten 30 abzulegen. Bei den ordnungsgemäßen Nachrichten handelt es sich hierbei um Nachrichten zum Abrufen der Bilder. Der zeitliche Abstand im Normalfall beträgt mehr als eine Sekunde. Dies wird in den Trainingsdaten 30 hinterlegt, mit denen das Anomalie-Erkennungssystem 50 trainiert wird. Sollte in einer späteren Betriebsphase der Client 11 innerhalb kurzer Zeit mehrere Bilder abfragen, so wird dies in den aktuellen Kommunikationsdaten 40 im Kontrollnetzwerk 10 sichtbar. Aufgrund des vorangegangenen Trainings kann das Anomalie-Erkennungssystem 50 diese Abweichung von dem antrainierten zeitlichen Abstand der entsprechenden Nachrichten erkennen und daraus z. B. schließen, dass der Client 11 von einem Angreifer übernommen wurde. Zur Erkennung der Abweichung nach vorangegangenem Training ist das Anomalie-Erkennungssystem 50 beispielsweise als neuronales Netz 60 oder als Support-Vektor-Maschine programmiert.

Im Folgenden wird ein drittes Ausführungsbeispiel beschrieben, welches alternativ, aber auch ergänzend zum zweiten Ausführungsbeispiel implementiert werden kann. Im dritten Ausführungsbeispiel fragt der Web-Client 12 regelmäßig (z.B. alle ein oder zwei Sekunden) aktuelle Werte eines Bildes, welches ein Bediener gerade betrachtet, von einem Server im Kommunikationsnetzwerk 10 ab. Diese Abfrage geschieht automatisch ohne Zutun des Bedieners, daher sind die Abstände der Nachrichten (abgesehen von einem möglichem Jitter im Netzwerk) immer genau gleich. Ein Wechsel zwischen verschiedenen Bildern wird dagegen in der Regel vom Bediener initiiert und wird daher in eher unregelmäßigen Abständen erfolgen. Erfolgt dieser Wechsel dennoch in genau gleichen Zeitabständen, so muss dies programmgesteuert sein. Dies deutet auf eine (möglicherweise unzulässige) Automatisierung des Anzeigenwechsels durch das Bedienpersonal hin, mit dem eine physikalische Abwesenheit vom Web-Client 12 verschleiert werden soll, oder auf einen von einem Angreifer übernommenen Web-Client 12, welcher Informationen über die technische Anlage erlangen will und dazu mit niedriger Frequenz Bilder abfragt.

Bei der Implementierung des dritten Ausführungsbeispiels wird darauf geachtet, dass in den Trainingsdaten 30 die zeitlichen Abstände von Nachrichten, welche einen Wechsel zwischen verschiedenen Bildern signalisieren, etwas unregelmäßig sind, wie dies bei der Abfrage durch den Bediener zu erwarten ist. Hierdurch wird das trainierte Anomalie-Erkennungssystem 50 in die Lage versetzt, auffallend regelmäßige zeitliche Abstände zu erkennen und daraus auf einen Angriff zu schließen.

Gemäß einem vierten Ausführungsbeispiel, welches wiederum alternativ, aber auch ergänzend zu den vorangegangenen Ausführungsbeispielen implementiert werden kann, wird eine regelmäßige oder kurzzeitige Wiederholung eines gleichen Befehls (z.B. Befehl "Ventil 123 schließen", alle 2s) durch das Anomalie-Erkennungssystem 50 als Abweichung - und damit als Hinweis auf eine Fehlfunktion eines Anlagenteils oder auf einen Angriff - erkannt. Vor dem Training des Anomalie-Erkennungssystems wird sichergestellt, dass eine solche Abfolge von Befehlen in den Trainingsdaten 30 nicht enthalten ist.

Als Grundlage wird in allen Ausführungsbeispielen ein Anomalie-Erkennungssystem 50 verwendet, welches einen Datenstrom zwischen der Beobachtungs- oder Kontrollstation (Client 11, Web-Client 12, Support-Station 13) und jeweiligen Servern im Kontrollnetzwerk 10 als Kommunikationsdaten mitschneidet und analysiert.

Zur Implementierung des Verfahren eignen sich besonders Algorithmen, die
a) in einer Lernphase (erster Schritt 1, zweiter Schritt 2, dritter Schritt 3) Sequenzen (d.h. zeitliche Reihenfolgen) von Nachrichten inklusive ihrer zeitlichen Abstände generalisiert als Trainingsdaten 30 erfassen können, und
b) in einer Betriebsphase (vierter Schritt 4, fünfter Schritt 5) in den aktuellen Kommunikationsdaten 40 Sequenzen erkennen können, die entweder in Bezug auf die Abfolge der einzelnen Nachrichten und/oder ihre zeitlichen Abstände signifikant von den Trainingsdaten 30 abweichen.

Ein bekannter Ansatz hierfür ist das sogenannte Episode Rule Mining, welches die Häufigkeit von aufeinander folgenden Ereignissen in zeitlichen Intervallen untersucht und sich auch zum Klassifizieren eignet. Das Episode Rule Mining ist als Algorithmus von Mannila bekannt aus Mannila, H.; Toivonen, H.; und Verkamo, A.: "Discovery of frequent episodes in event sequences", in Data Mining and Knowledge Discovery 1, Kluwer Academic Publishers, 1997, Seiten 259-298.

Der Algorithmus von Mannila findet in einem Satz von Daten häufige Episoden der Form: X,Y -> Z (s, k, w), wobei X, Y und Z bestimmte Ereignismengen sind, die in einem Zeitfenster der Länge w in der Reihenfolge X...Y...Z auftauchen. s ist der sogenannte Support (die relative Häufigkeit von XuYuZ in der Gesamtmenge), und k ist die Konfidenz = s(XuY) / s (XUYUZ) . Die Konfidenz k misst also die relative Häufigkeit des Vorkommens der Konklusion unter Bedingung der Prämisse (X,Y). Interessant sind dabei nur Episoden, die eine gewisse Mindesthäufigkeit smin und Konfidenz kmin haben.

Übertragen auf das zweite Ausführungsbeispiel seien X, Y und Z im Mitschnitt der Kommunikationsdaten gefundene Ereignismengen (Mengen von Nachrichten), die einem Informationsfluss zur Übertragung dreier Bilder Bx, By und Bz entsprechen. Werden diese Bilder für eine graphische Darstellung vom Client 11 angefordert, so geschieht dies in einem kurzen Zeitfenster w. Wird die Graphik zusätzlich immer wieder aktualisiert, ergibt sich bereits eine häufige Episode X,Y, Z wie sie der Algorithmus findet.

Eine Gesamtheit gefundener Episoden in den Kommunikationsdaten kennzeichnet damit einen normalen Datenfluss inklusive normaler zeitlicher Intervalle im Kontrollnetzwerk 10 der technischen Anlage.

Sobald in der Betriebsphase in den aktuellen Kommunikationsdaten 40 viel längere Episoden im gleichen Zeitfenster w beobachtet werden, deutet dies auf den im zweiten Ausführungsbeispiel beschriebenen Angriff hin. Auch ganz neue Episoden, die gemessen an den Trainingsdaten 30 nicht auftreten sollten, können auf einen Angriff hindeuten.

Alternativ zum Algorithmus vom Mannila lässt sich das Verfahren auch durch aus dem Stand der Technik bekannte probabilistische Ansätze wie etwa erweiterte Markov-Modelle implementieren (siehe z.B. Ge, X.; Smyth, P: "Deformable Markov model templates for time-series pattern matching", in Proceedings of the 6th ACM SIGKDD International Conference on Knowledge Discovery and Data Mining, Boston, MA, August 2000, Seiten 81-90.). Diese und ähnliche Algorithmen werden bereits in anderen Domänen erfolgreich für vergleichbare Klassifikationsaufgaben eingesetzt, etwa zur Analyse von ECG und EEG-Signalen für eine Gehirn-Computer-Interaktion, zur Mustererkennung in Finanzdaten, zur Spracherkennung, zur automatischen Klassifikation von Musikstücken sowie zur Analyse eines Click-Verhaltens von Spielern in Multi-Player-Spielen, aber auch in Bezahlmodellen des Internet (siehe Schlüssler, T.; Goglin, S.; Johnson, E.: "Is a bot at the Controls? Detecting Input Data Attacks", in Proceedings of the 6th ACM SIGCOMM NetGames, Melbourne, Australien, September 2007).

## Patentansprüche

1. Verfahren zur Anomalie-Erkennung in einem Kontrollnetzwerk (10), bei dem ein Mikroprozessor programmiert ist, um
- in einem ersten Schritt (1) Kommunikationsdaten in dem Kontrollnetzwerk (10) zu ermitteln,
- in einem zweiten Schritt (2) eine zeitliche Reihenfolge und/oder zeitliche Abstände von ordnungsgemäßen Nachrichten in den Kommunikationsdaten zu ermitteln und in Trainingsdaten (30) abzulegen,
- in einem dritten Schritt (3) ein Anomalie-Erkennungssystem (50) mit den Trainingsdaten (30) zu trainieren,
- in einem vierten Schritt (4) aktuelle Kommunikationsdaten (40) in dem Kontrollnetzwerk zu ermitteln, und
- mit dem Anomalie-Erkennungssystem (50) in einem fünften Schritt (5) die zeitliche Reihenfolge und/oder die zeitlichen Abstände der ordnungsgemäßen Nachrichten in den aktuellen Kommunikationsdaten (40) auf eine Abweichung von den Trainingsdaten (30) zu prüfen.

2. Verfahren nach Anspruch 1,
- bei dem das Anomalie-Erkennungssystem (50) im fünften Schritt (5) eine Abweichung erkennt, wenn eine Einheit (20) im Kontrollnetzwerk (50), insbesondere eine Beobachtungs- oder Kontrollstation, eine Fehlfunktion aufweist, von einem Angreifer übernommen oder von einem Benutzer unzulässig verändert wurde.

3. Verfahren nach Anspruch 1,
- bei dem das Anomalie-Erkennungssystem (50) als netzwerkbasiertes Einbruchs-Erkennungssystem implementiert ist und die Kommunikationsdaten sowie die aktuellen Kommunikationsdaten (40) Netzwerkverkehrsdaten sind, oder
- bei dem das Anomalie-Erkennungssystem (50) als gerätebasiertes Einbruchs-Erkennungssystem implementiert ist und die Kommunikationsdaten sowie die aktuellen Kommunikationsdaten (40) ein Kommunikationsverhalten eines Geräts, insbesondere eines Servers, beschreiben.

4. Verfahren nach Anspruch 1,
- bei dem im zweiten Schritt (2) die zeitliche Reihenfolge und/oder zeitlichen Abstände der ordnungsgemäßen Nachrichten in den Kommunikationsdaten mithilfe eines Episode Rule Mining, insbesondere einem Algorithmus nach Mannila, oder mithilfe eines probabilistischen Verfahrens, insbesondere einem Verfahren mit erweiterten Markov-Modellen, ermittelt werden.

5. Verfahren nach Anspruch 1,
- bei dem das Anomalie-Erkennungssystem (50) zumindest teilweise aus einem neuronalen Netz (60) oder einer Support-Vektor-Maschine besteht.

6. Verfahren nach Anspruch 1,
- bei dem das Kontrollnetzwerk ein Netzwerk für Überwachung und Steuerung, Industrie- oder Gebäudeautomatisierung ist.

7. Verfahren nach Anspruch 1,
- bei dem die Einheit eine Beobachtungs- oder Kontrollstation ist.

8. Computerlesbarer Datenträger,
- auf dem ein Computerprogramm gespeichert ist, welches das Verfahren nach einem der vorangegangenen Ansprüche ausführt, wenn es in einem Computer abgearbeitet wird.

9. Computerprogramm,
- welches in einem Computer abgearbeitet wird und dabei das Verfahren nach einem der Ansprüche 1 bis 7 ausführt.
